# EUROPÄISCHE PATENTSCHRIFT

(11) **EP 3 152 820 B1**
(45) Veröffentlichungstag und Bekanntmachung des Hinweises auf die Patenterteilung: **07.08.2019**
(21) Anmeldenummer: 15722236.5
(22) Anmeldetag: 18.05.2015
(51) Int. Cl.: H02K 7/00, H02K 9/10, H02K 9/19

(54) **MEDIENTRANSPORT IN ROTORWELLE**
TRANSPORT OF MEDIA IN ROTOR SHAFT
TRANSPORT DE MÉDIA DANS L'ARBRE ROTORIQUE

(30) Priorität: 04.06.2014 DE 102014107843
(43) Veröffentlichungstag der Anmeldung: 12.04.2017
(73) Patentinhaber: ThyssenKrupp Presta TecCenter AG, 9492 Eschen (LI)
(72) Erfinder: KÖTSCHAU, Christian, 09112 Chemnitz (DE); PAUL, Daniel, 09235 Burkhardtsdorf (DE)
(74) Vertreter: thyssenkrupp Intellectual Property GmbH
(86) Internationale Anmeldenummer: PCT/EP2015/060909
(87) Internationale Veröffentlichungsnummer: WO 2015/185349

(56) Entgegenhaltungen:
- EP-A1- 1 953 896
- GB-A- 191 126 756
- JP-A- 2004 159 402

## Beschreibung

Die Erfindung betrifft eine Rotorhohlwelle für den Rotor einer elektrischen Maschine, wobei die Rotorhohlwelle einen beidseitig von Stirnflanschen abgeschlossenen Zylindermantel aufweist, wobei sich an den Stirnflanschen jeweils ein Wellenzapfen befindet und wobei zumindest in einem der Stirnflansche insbesondere im Wellenzapfen eine koaxiale Zugangsbohrung vorgesehen ist, die einen Zugang für ein Medium zu dem von einem Zylindermantel umgebenen Wellenhohlraum bildet. Die Erfindung betrifft zudem einen Rotor aufweisend eine mit Blechpaketen bestückte Rotorhohlwelle und eine entsprechende elektrische Maschine.

### STAND DER TECHNIK

Wie beispielsweise aus dem DE 42 40 045 C1 und dem DE 203 07 198 U1 ersichtlich, sind derartige Rotorhohlwellen seit längerer Zeit bekannt und werden überall dort eingesetzt, wo es auf eine möglichst leichte Bauweise ankommt. Wenn die Rotorhohlwellen aus mehreren Teilen, insbesondere einem Zylindermantel und zwei Stirnflanschen "zusammengebaut" sind, werden sie auch als "gebaute" Rotorwellen bezeichnet.

Von hohlen Rotorwellen elektrischer Maschinen ist auch bekannt, sie insbesondere zu Zwecken der Kühlung des Rotors mit einem Medium zu durchströmen. Diesbezüglich sei beispielsweise auf EP 0 659 308 oder DE 199 13 199 A1 verwiesen, wo das Kühlmedium über ein Rohr in den Hohlraum hinein und durch diesen zurück zu einem Auslass zurück geleitet wird. Es hat sich jedoch heraus gestellt, dass diese Art der Kühlung unzureichend ist und nicht im Verhältnis zum konstruktiven Aufwand und zu der Verschlechterung der Laufeigenschaften des Motors steht.

Weiterhin sind elektrische Maschinen bekannt, bei denen ein Medium, beispielsweise ein Schmier- oder Kühlmittel von einer Stirnseite zur anderen transportiert werden muss, weil beispielsweise einseitig eine Ölwanne vorgesehen ist, das Öl jedoch auch an anderer Stelle benötigt wird. In diesem Fall hat der Rotor eine reine Durchleitfunktion. Für diese Funktion eignen sich bislang bekannten Hohlwellen insofern kaum, als das Medium über einen engen in den Wellenzapfen eingebrachten Kanal zugeführt wird und sich dann in der Hohlwelle mit wesentliche größerem Durchmesser verteilt, um auf der anderen Seite durch einen engen Kanal wieder auszutreten. Ein solches Durchleiten von flüssigem Medium kann vorteilhaft sein, um das kühlende Medium beispielsweise dem Stator zuzuführen. Ein entsprechender Rotor ist beispielsweise in der GB 26756 A offenbart, welcher einen Zylindermantel mit einem Hohlraum sowie zwei an den Stirnseiten des Zylindermantels angeordnete Wellenzapfen aufweist. Durch beide Wellenzapfen erstreckt sich jeweils eine Bohrung, welche es ermöglicht ein Kühlmedium, wie Wasser, in den Hohlraum zu leiten. Innerhalb des Hohlraumes sind zudem Flansche angeordnet, welche verdrehfest zum Zylindermantel ausgebildet sich und sich folglich mit der Rotorwelle mitdrehen. Diese Drehung der Flansche verursacht eine Fließbewegung des Kühlmediums durch den Hohlraum hindurch.

Bei solchen Maschinen mit Durchleitfunktion kommt es wegen der erheblichen Aufweitung des Leitungsquerschnittes zu Laufunruhen, die durch die Expansion des Mediums in die Hohlwelle und durch die Turbulenzen innerhalb der Hohlwelle verursacht werden. Zudem kompensiert eine vollständig mit flüssigem Medium gefüllte Hohlwelle den Vorteil der Gewichtsersparnis. Insbesondere wirkt sich das Befüllen eines Hohlzylinders mit Flüssigkeit im Hinblick auf den Einsatz in der elektrischen Maschine negativ auf sein rotatorisches Trägheitsmoment aus. Insofern liegen die Nachteile dieses Standes der Technik in dem unnötig großen Medienvolumen im Rotorwellenhohlraum und in der unnötig schweren Rotorwelle respektive in der eingeschränkten Möglichkeit der Leichtbauoptimierung.

### DIE ERFINDUNG

Aufgabe der vorliegenden Erfindung ist es nunmehr, eine konstruktive einfach aufgebaute und kostengünstig herstellbare Rotorhohlwelle vorzuschlagen, die bei geringem Gewicht und guten Laufeigenschaften eine ausgezeichnete Durchleitfunktion aufweist.

Diese Aufgabe wird durch die Rotorhohlwelle nach Anspruch 1 gelöst. Vorteilhafte Ausführungsformen sind in den Unteransprüchen beschrieben.

Demnach liegt der wesentliche Aspekt der erfindungsgemäßen Rotorhohlwelle in dem hohlen Durchleitungselement, das innerhalb des Wellenhohlraums angeordnet ist und das den reibungsarmen, weil möglichst laminaren, Durchfluss des flüssigen oder gasförmigen Mediums von einem Wellenzapfen zum anderen gewährleistet. Erfindungsgemäß ist dieses Durchleitungselement gegen den Wellenhohlraum abdichtend in die Zugangsbohrung des endseitigen Wellenzapfens eingepasst, so dass kein Medium in den Wellenhohlraum gelangt. Das Durchleitungselement führt durch den umgebenden Wellenhohlraum hindurch bis zum anderen Wellenzapfen, wo es ebenfalls gegen den Wellenhohlraum abdichtend eingepasst ist. Dabei sind Ausführungsformen der Rotorhohlwelle denkbar, bei denen das Medium in geradem Strahl auf der anderen Seite koaxial wieder austritt. Bei anderen Ausführungsformen wird der Strom des Mediums am anderen Ende in radialer Richtung aus dem Durchleitungselement hinaus geführt, um beispielsweise die Statorwicklungen mit Kühlmedium beaufschlagen zu können.

Die Erfindung gewährleistet den Medientransport, insbesondere von Flüssigkeiten, wie Schmier- und Kühlmittel oder von Gasen, z.B. von Druckluft, durch eine hohlzylindrische Rotorwelle. Dabei ist eine einseitige Einleitung des Mediums in die Rotorwelle und die Weiterleitung an das andere axiale Wellenende oder an radiale Austrittsstellen am anderen Wellenende vorgesehen. Dabei wird das Volumen des Mediums auf das für die Anwendung notwendige, möglichst geringe Maß begrenzt, wobei die konstruktive Gestaltung unabhängig von Aufbau und vom Hohlraumvolumen der Rotorwelle ist. Der so hervorgerufene axiale Medientransport und die dazu nötigen Mittel erzeugen keine Unwucht, da die Masse koaxial gleichmäßig zur Drehachse verteilt und im günstigsten Fall kreisrund konzentrisch zur Drehmitte ausgebildet ist.

Durch das Vorsehen des Durchleitungselementes wird die Funktion der Durchleitung von der weiteren Konzeption der Rotorhohlwelle entkoppelt, so dass trotz Durchleitung ein großer und geometrisch frei gestaltbarer Hohlraum in der Leichtbaurotorwelle verbleibt. Es sei in diesem Zusammenhang darauf hingewiesen, dass das beanspruchte Merkmal "einpassen" auch bedeuten kann, dass das Durchleitungselement als zylindrisches Röhrchen einstückig an die Stirnflansche insbesondere durch den Prozess des Rundknetens angeformt ist und quasi die axial von Außen zugängliche Zugangsbohrung ausbildet. In einer besonders einfachen Ausführungsform ist das Durchleitungselement jedoch ein separates Bauteil eines ansonsten "gebauten" Rotors, das in die Wellenzapfen vermittels einer Dichtung eingepasst (eingebaut) oder in einem Fügeprozess eingefügt ist. Als Fügeprozess bietet sich dabei ein solcher mit plastischer Verformung insbesondere des Durchleitungselementes an.

Auch wenn das Durchleitungselement auch für die Durchleitung gasförmiger Medien problemlos geeignet ist, kommen die Vorteile der erfindungsgemäßen Rotorhohlwelle besonders beim Einsatz flüssiger Medien, wie Öl oder Wasser, zum tragen. Sie liegen insbesondere darin, dass das erfindungsgemäße Durchleitungselement auch bei schon vorgegebener Geometrie des Rotors eingesetzt werden kann, so dass keine konstruktiven Änderungen weder an den Blechpaketen noch am Stator oder sonstigen Komponenten vorgenommen werden müssen. Im Gegenteil, mit dem erfindungsgemäßen Durchleitungselement ist eine von der umgebenden Geometrie weitgehend unabhängige Möglichkeit der parallelen Optimierung der vorgenannten Funktionen gegeben. Insbesondere wird die optimale Durchleitfunktion bei größtmöglicher Gewichtsreduzierung des Rotors gewährleistet. Ein weiterer Vorteil ist, dass die Zusatzfunktion des Medientransports wegen des frei zu gestaltenden Strömungsquerschnittes des Durchleitungselementes an den Volumenbedarf und an die Laufeigenschaften des Rotors angepasst werden kann.

In einer besonders vorteilhaften weil einfachen Ausführungsform ist das Durchleitungselement ein hohlzylindrisches Rohrstück, das den Wellenhohlraum von einer zur anderen Stirnseite durchragt und dessen Außendurchmesser erheblich kleiner als der Innendurchmesser des Wellenhohlraums ist. Im Idealfall ist der Innendurchmesser gleich dem Innendurchmesser der Zugangsbohrung, so dass Kanten, an denen Turbulenzen auftreten können, vermieden werden.

In dem Ausführungsbeispiel, bei dem das Durchleitungselement ein separates Bauteil insbesondere in Form eines Rohrstückes ist, sind wiederum zwei Varianten zu unterscheiden. Bei der ersten Variante ist das Rohrstück in eine zylindrische Aufnahme eingepresst, die auf der Innenseite des Stirnflansches die innere Mündung der Zugangsbohrung umgibt. In dieser ersten Ausführungsform setzt das Rohrstück erst jeweils hinter der Zugangsbohrung an. Sie eignet sich besonders für gebaute Rotoren. Bei der anderen zweiten Variante ist das Rohrstück in beide Zugangsbohrungen derart eingepasst, dass es mit beiden äußeren Kanten jeweils mit dem Rand der Zugangsbohrung bündig abschließt. Damit bildet das Rohrstück selber die Zugangsbohrung aus, in die es eingesteckt ist. Diese Ausführungsform eignet sich besonders für die Bestückung einteiliger Rotorwellen.

Bei beiden Ausführungsformen können der Innen- und der Außendurchmesser des Durchleitelementes innerhalb der Gegebenheiten passend zum Volumenstrombedarf des durchzuleitenden Mediums und unabhängig vom Aufbau der Rotorwelle und dem Volumen des Hohlraums der hohlen Welle dimensioniert werden. Dabei ist es von Vorteil, dass die Menge des durchströmenden Mediums auf den tatsächlichen Bedarf beschränkt ist. Ein konstanter Querschnitt des Durchleitungselementes bietet hierzu die besten Voraussetzungen.

Bei der ersten Ausführungsform ist das Rohrstück vorteilhafterweise beidseitig in eine ringförmige, auf der Innenseite des jeweiligen Stirnflansches ausgebildet Aufnahme eingepresst, in der jeweils eine Dichtkante ausgebildet ist. Die Dichtkante hat dabei die Funktion eines Schneidrings und ermöglicht den Verzicht auf zusätzliche Dichtmittel. Das dichtende Einpressen geht dabei mit einem Verformen der in die Aufnahmen eingepressten Enden des Rohrstückes einher, das aus einem weicheren Material, beispielsweise Aluminium oder Kunststoff, als die Stirnflansche gefertigt ist. Dabei weist der Außendurchmesser des Rohrstückes eine Überdeckung, mithin ein Übermaß, bezüglich des Dichtkantendurchmessers der Aufnahme auf. Am Außendurchmesser des weniger festen Rohrstückes findet beim Einpressvorgang eine partielle, plastische Materialverdrängung durch die Dichtkantengeometrie in der Aufnahme statt, wobei die Aufnahmen jeweils in den Stirnflansch aus einem Material höherer Festigkeit, beispielsweise einem Stahl, eingebracht sind. Die somit erzeugte, in das weiche Rohrstück eingeschnittene Abdichtung kommt über den gesamten Temperaturbereich ohne zusätzliche Dichtmittel aus. Vorteilhaft ist eine Länge der Dichtkante in Abhängigkeit vom Durchmesser der Aufnahme zwischen 1 mm und 4 mm, wobei sich eine Länge von 2 mm als besonders geeignet erwiesen hat.

Im Falle der ersten Ausführungsform ist die Rotorhohlwelle vorteilhafterweise aus mehreren Bauteilen aufgebaut, nämlich aus dem Zylindermantel des Rotors, dem darin befindlichen Rohrstück und den beiden Stirnflanschen, die das Rohrstück aufnehmen und den Zylindermantel stützen. Diese Bauteile können durch Fügen zusammengesetzt werden, wobei vorteilhafterweise zunächst das Rohrstück in eine Aufnahme eingepresst wird, dann wird diese Vormontage mit dem Zylindermantel gefügt und schließlich beim Aufpressen des zweiten Stirnflansches in einem parallelen Prozess die Fügeverbindung von Zylindermantel und Stirnflansch sowie die abdichtende Einpressverbindung von Rohrstück und Aufnahme hergestellt.

Im Falle der zweiten Ausführungsform, bei der das Rohrstück in beide Zugangsbohrungen eingepasst ist und jeweils mit der äußeren Kante der Zugangsbohrung bündig abschließt, ist es vorteilhaft, wenn das Rohrstück unter einer Temperaturdifferenz zwischen Rohrstück und Stirnflanschen in die Zugangsbohrungen dichtend eingepasst ist. Dazu werden die Zugangsbohrungen durch Erwärmung der Stirnflansche respektive der gesamten Rotorhohlwelle aufgeweitet, bevor das Rohrstück, das vorteilhafterweise durch Kühlen "geschrumpft" wurde, eingesetzt wird. Mit Temperaturausgleich wird das Rohrstück dichtend in die Zugangsbohrungen eingepresst.

Der Einsatz von Rohrstücken ließe es auch zu, mehrere getrennte Strömungsquerschnitte durch entsprechend mehrere parallel verlaufende Rohrstücke oder mehrere Kanäle in einem Rohrstück zu realisieren. Damit können gleichzeitig unterschiedliche Funktionen, wie Schmierung und Kühlung, oder die getrennte Führung unterschiedlicher Medien, wie Wasser und Öl, realisiert werden.

### BEVORZUGTE AUSFÜHRUNGSBEISPIELE DER ERFINDUNG

Ausführungsformen der erfindungsgemäßen Rotorhohlwelle werden nachfolgend anhand der Figuren näher erläutert. Dabei zeigen:
- **Figur 1**: eine Rotorhohlwelle der ersten Ausführungsform,
- **Figur 2**: einen von Medium durchflossenen Rotor,
- **Figur 3**: eine Rotorhohlwelle der zweiten Ausführungsform und
- **Figur 4**: eine Rotorhohlwelle mit radialem Austritt.

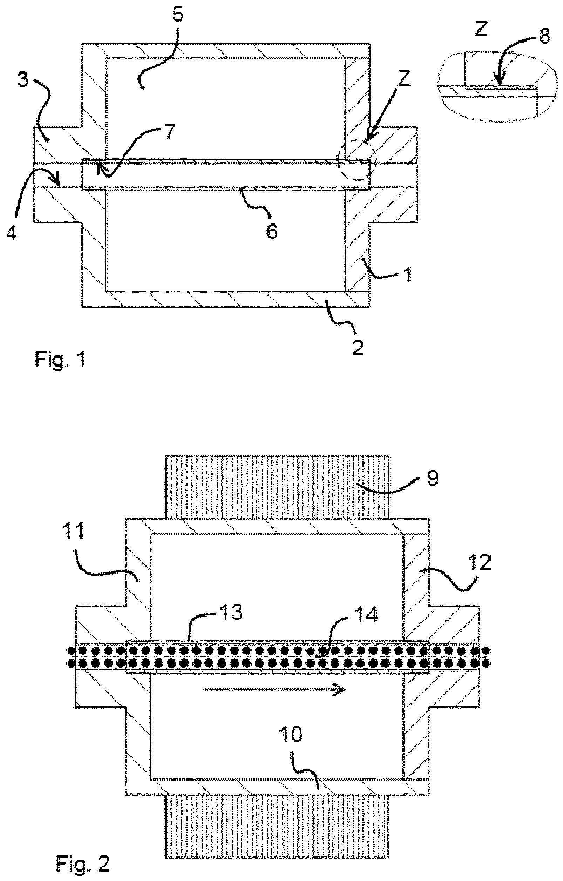

In Figur 1 ist eine rotationssymmetrische Rotorhohlwelle für den Rotor einer elektrischen Maschine gezeigt. Diese hat einen beidseitig von Stirnflanschen 1 aus Stahl abgeschlossenen Zylindermantel 2, wobei sich an den Stirnflanschen 1 jeweils ein Wellenzapfen 3 befindet. Dabei kann der Wellenzapfen einstückig am Stirnflansch ausgebildet oder ein separates am Stirnflansch gehaltenes Bauteil sein. In diesem Fall sind an beiden Wellenzapfen koaxiale Zugangsbohrungen 4 vorgesehen, die, solange nicht verschlossen, einen Zugang zu dem von einem Zylindermantel 2 umgebenen Wellenhohlraum 5 darstellen. Als Durchleitungselement ist ein hohlzylindrisches Rohrstück 6 aus weichem Material, wie Aluminium oder Kunststoff, vorgesehen, dessen Außendurchmesser ersichtlich kleiner als der Innendurchmesser des Wellenhohlraums 5 ist. Das Rohrstück 6 ist seitens des Wellenhohlraums 5 beidseitig in ringförmig ausgedrehte Aufnahmen 7 eingepresst, die um die Zugangsbohrungen 4 herum eingedreht sind. Die Pressung des Rohrstückes 6 in den Aufnahmen 7 dichtet gegen den Wellenhohlraum 5 ab, so dass ein durch das Rohrstück 6 von einem zum anderen Wellenzapfen hindurch geleitetes flüssiges oder gasförmiges Medium nicht in den Wellenhohlraum 5 gelangt. In diesem Fall ist der Innendurchmesser des Rohrstücks 6 etwas kleiner als der Innendurchmesser der Zugangsbohrung 4, wobei sich beide Innendurchmesser nahezu gleichen.

Das Einpressen des weicheren Rohrstückes 6 in die Aufnahmen 7 der härteren Stirnflansche 1 geschieht mittels eines Dichtkantenverfahrens, einem speziellen Fügeverfahren. Dabei verformt sich das eingepresste Ende des Rohrstückes 6 plastisch an einer ringförmigen Dichtkante 8 (s. Ausschnitt Z), die in der Aufnahme 7 vorgesehen ist.

Figur 2 zeigt einen Rotor aufweisend eine mit Blechpaketen 9 bestückte Rotorhohlwelle, die auf der einen Seite einen an den Zylindermantel 10 angeformten Stirnflansch 11 und auf der anderen Seite einen in den Zylindermantel 10 eingepressten Stirnflansch 12. Zwischen den Stirnflanschen 11 und 12 ist ein Durchleitungselement in Form eines Rohrstückes 13 eingepresst, das koaxial von einem flüssigen Medium 14 in Pfeilrichtung durchflossen wird.

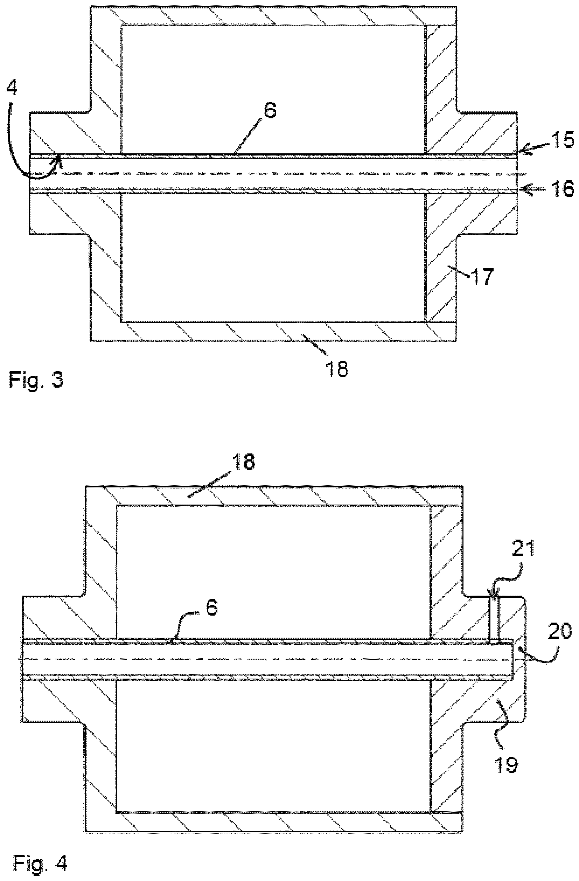

Figur 3 zeigt die zweite Ausführungsform einer Rotorhohlwelle, bei der das in beide Zugangsbohrungen 4 eingepasste Rohrstück 6 jeweils mit seiner äußeren Kante 16 bündig mit der Kante 15 der Zugangsbohrung 4 abschließt. In diesem Fall sind die Stirnflansche 17 und der Mantel 18 in einem Gießverfahren einstückig zur Rotorhohlwelle geformt. Das Rohrstück 6 ist unter einer Temperaturdifferenz in die Zugangsbohrungen 4 dichtend eingepasst.

In Figur 4 ist eine Ausführungsvariante der Rotorhohlwelle nach Figur 3 gezeigt, bei der das Rohrstück 6 einseitig in eine Aufnahme 19 eingepasst und vom Boden 20 der Aufnahme 19 axial verschlossen ist. Die Ausleitung des Mediums geschieht durch eine radial im Rohrstück 6 und in der Aufnahme 19 eingebrachte Bohrung 21.

### Bezugszeichenliste

- 1: Stirnflansch
- 2: Zylindermantel
- 3: Wellenzapfen
- 4: Zugangsbohrung
- 5: Wellenhohlraum
- 6: Rohrstück
- 7: Aufnahme
- 8: Dichtkante
- 9: Blechpaket
- 10: Zylindermantel
- 11: angeformter Stirnflansch
- 12: eingepresster Stirnflansch
- 13: Rohrstück
- 14: flüssiges Medium
- 15: Kante der Zugangsbohrung
- 16: Kante des Rohrstückes
- 17: Stirnflansch der einstückigen Rotorhohlwelle
- 18: Mantel der einstückigen Rotorhohlwelle
- 19: topfförmige Aufnahme
- 20: Boden der Aufnahme
- 21: radial ausgerichtete Bohrung

## Patentansprüche

1. Rotorhohlwelle für den Rotor einer elektrischen Maschine, aufweisend einen beidseitig von Stirnflanschen (1,11,12,17) abgeschlossenen Zylindermantel (2,10,18), wobei sich an den Stirnflanschen (1,11,12,17) jeweils ein Wellenzapfen (3) befindet, wobei zumindest in einem Stirnflansch insbesondere in einem der Wellenzapfen (3) eine Zugangsbohrung (4) vorgesehen ist, die einen Zugang zu dem von einem Zylindermantel (2,10,18), umgebenen Wellenhohlraum (5) bildet,
**gekennzeichnet durch**
ein Durchleitungselement (6,13), das gegen den Wellenhohlraum (5) abdichtend in die Zugangsbohrung (4) eingepasst ist und das durch den umgebenden Wellenhohlraum (5) hindurch bis zum anderen Wellenzapfen (3) führt, wo es ebenfalls gegen den Wellenhohlraum (5) abdichtend eingepasst ist, wobei das Durchleitungselement (6,13) die Durchleitung eines flüssigen oder gasförmigen Mediums (14) ermöglicht.

2. Rotorhohlwelle nach Anspruch 1,
**dadurch gekennzeichnet,**
**dass** das Durchleitungselement ein hohlzylindrisches Rohrstück (6,13) ist, dessen Außendurchmesser kleiner als der Innendurchmesser des Wellenhohlraums (5) ist

3. Rotorhohlwelle nach Anspruch 2,
**dadurch gekennzeichnet,**
**dass** das Rohrstück (6,13) in eine zylindrische Aufnahme (7) eingepresst ist, die auf der Innenseite des Stirnflansches (1,11,12) die innere Mündung der Zugangsbohrung (4) umgibt, wobei insbesondere der Innendurchmesser des Rohrstücks (6,13) zumindest nahezu dem Innendurchmesser der Zugangsbohrung (4) gleicht.

4. Rotorhohlwelle nach Anspruch 3,
**dadurch gekennzeichnet,**
**dass** das Rohrstück (6,13) beidseitig in eine Aufnahme auf der Innenseite des jeweiligen Stirnflansches (1,11,12) eingepresst ist.

5. Rotorhohlwelle nach Anspruch 3 oder 4,
**dadurch gekennzeichnet,**
**dass** das Rohrstück (6,13) aus einem weicheren Material, insbesondere Aluminium oder Kunststoff, als die Stirnflansche (1,11,12) gefertigt ist, wobei das Rohrstück (6,13) durch das Einpressen in die Aufnahme (7), in der eine Dichtkante (8) vorgesehen ist, verformt ist.

6. Rotorhohlwelle nach einem der Ansprüche 3 bis 5,
**gekennzeichnet durch**
einen mehrteiligen Aufbau aus dem Zylindermantel (2), dem Rohrstück (6) und den Stirnflanschen (1), wobei die Bauteile in Fügeverfahren zusammengesetzt sind.

7. Rotorhohlwelle nach Anspruch 2,
**dadurch gekennzeichnet,**
**dass** das Rohrstück (6) in beide Zugangsbohrungen (4) eingepasst ist und jeweils mit der äußeren Kante (15) der Zugangsbohrung (4) bündig abschließt.

8. Rotorhohlwelle nach Anspruch 7,
**dadurch gekennzeichnet,**
**dass** das Rohrstück (6) unter einer Temperaturdifferenz zwischen Rohrstück (6) und Stirnflanschen (17) in die Zugangsbohrungen (4) dichtend eingepasst ist.

9. Rotorhohlwelle nach einem der Ansprüche 7 oder 8,
**dadurch gekennzeichnet,**
**dass** die Stirnflansche (17) einteilig, insbesondere in einem Gießverfahren, an den Zylindermantel (18) angeformt sind.

10. Rotor aufweisend eine mit Blechpaketen bestückte Rotorhohlwelle nach einem der vorherigen Ansprüche.

11. Elektrische Maschine, insbesondere Asynchronmotor oder permanent erregte Synchronmaschine, mit einem Rotor nach Anspruch 10.

## Claims

1. Rotor hollow shaft for the rotor of an electric machine, having a cylinder jacket (2, 10, 18) which is closed off on both sides by end flanges (1, 11, 12, 17), wherein in each case one shaft journal (3) is situated on the end flanges (1, 11, 12, 17), wherein, at least in one end flange, in particular in one of the shaft journals (3), there is provided an access bore (4) which provides access to the shaft cavity (5) surrounded by a cylinder jacket (2, 10, 18),
**characterized by**
a leadthrough element (6, 13) which is fitted into the access bore (4) so as to impart a sealing action with respect to the shaft cavity (5) and which leads through the surrounding shaft cavity (5) to the other shaft journal (3), where said leadthrough element is likewise fitted so as to impart a sealing action with respect to the shaft cavity (5), wherein the leadthrough element (6, 13) permits the leadthrough of a liquid or gaseous medium (14).

2. Rotor hollow shaft according to Claim 1,
**characterized**
**in that** the leadthrough element is a hollow cylindrical pipe piece (6, 13) whose outer diameter is smaller than the inner diameter of the shaft cavity (5).

3. Rotor hollow shaft according to Claim 2,
**characterized**
**in that** the pipe piece (6, 13) is pressed into a cylindrical receptacle (7) which, on the inner side of the end flange (1, 11, 12), surrounds the inner mouth of the access bore (4), wherein in particular, the inner diameter of the pipe piece (6, 13) is at least approximately equal to the inner diameter of the access bore (4).

4. Rotor hollow shaft according to Claim 3,
**characterized**
**in that** the pipe piece (6, 13) is pressed at both sides into a receptacle on the inner side of the respective end flange (1, 11, 12).

5. Rotor hollow shaft according to Claim 3 or 4,
**characterized**
**in that** the pipe piece (6, 13) is manufactured from a softer material, in particular aluminum or plastic, than the end flanges (1, 11, 12), wherein the pipe piece (6, 13) is deformed as a result of the pressing into the receptacle (7), in which a sealing edge (8) is provided.

6. Rotor hollow shaft according to one of Claims 3 to 5,
**characterized by**
a multi-part construction composed of the cylinder jacket (2), the pipe piece (6) and the end flanges (1), wherein the components are assembled in joining processes.

7. Rotor hollow shaft according to Claim 2,
**characterized**
**in that** the pipe piece (6) is fitted into both access bores (4) and terminates flush in each case with the outer edge (15) of the access bore (4).

8. Rotor hollow shaft according to Claim 7,
**characterized**
**in that** the pipe piece (6) is fitted sealingly into the access bores (4) in the presence of a temperature difference between pipe piece (6) and end flanges (17).

9. Rotor hollow shaft according to either of Claims 7 and 8,
**characterized**
**in that** the end flanges (17) are integrally formed on the cylinder jacket (18) in unipartite fashion, in particular in a casting process.

10. Rotor having a rotor hollow shaft according to one of the preceding claims equipped with lamination assemblies.

11. Electric machine, in particular asynchronous motor or permanently excited synchronous machine, having a rotor according to Claim 10.

## Revendications

1. Arbre de rotor creux pour le rotor d'une machine électrique, présentant une paroi cylindrique (2, 10, 18) fermée de part et d'autre par des brides frontales (1, 11, 12, 17), dans lequel il se trouve respectivement un tourillon d'arbre (3) sur les brides frontales (1, 11, 12, 17), dans lequel il est prévu au moins dans une bride frontale, en particulier dans un des tourillons d'arbre (3), un alésage d'accès (4), qui forme un accès vers la cavité d'arbre (5) entourée par une paroi cylindrique (2, 10, 18),
**caractérisé par** un élément de transfert (6, 13), qui est ajusté dans l'alésage d'accès (4) de façon étanche par rapport à la cavité d'arbre (5) et qui conduit à travers la cavité d'arbre enveloppante (5) jusqu'à l'autre tourillon d'arbre (3), où il est également ajusté de façon étanche par rapport à la cavité d'arbre (5), dans lequel l'élément de transfert (6, 13) permet le transfert d'un milieu liquide ou gazeux (14).

2. Arbre de rotor creux selon la revendication 1, **caractérisé en ce que** l'élément de transfert est une pièce tubulaire cylindrique creuse (6, 13), dont le diamètre extérieur est inférieur au diamètre intérieur de la cavité d'arbre (5).

3. Arbre de rotor creux selon la revendication 2, **caractérisé en ce que** la pièce tubulaire (6, 13) est sertie dans un logement cylindrique (7), qui entoure sur le côté intérieur de la bride frontale (1, 11, 12) l'embouchure intérieure de l'alésage d'accès (4), dans lequel en particulier le diamètre intérieur de la pièce tubulaire (6, 13) est au moins approximativement égal au diamètre intérieur de l'alésage d'accès (4).

4. Arbre de rotor creux selon la revendication 3, **caractérisé en ce que** la pièce tubulaire (6, 13) est sertie de part et d'autre dans un logement sur le côté intérieur de la bride frontale respective (1, 11, 12).

5. Arbre de rotor creux selon une revendication 3 ou 4, **caractérisé en ce que** la pièce tubulaire (6, 13) est fabriquée en un matériau plus tendre, en particulier en aluminium ou en matière plastique, que les brides frontales (1, 11, 12), dans lequel la pièce tubulaire (6, 13) est déformée par le sertissage dans le logement (7), dans lequel il est prévu une portée d'étanchéité (8).

6. Arbre de rotor creux selon l'une quelconque des revendications 3 à 5, **caractérisé par** un ensemble en plusieurs parties composé de la paroi cylindrique (2), de la pièce tubulaire (6) et des brides frontales (1), dans lequel les composants sont réunis par un procédé d'assemblage.

7. Arbre de rotor creux selon la revendication 2, **caractérisé en ce que** la pièce tubulaire (6) est ajustée dans les deux alésages d'accès (4) et se termine à fleur du côté extérieur (15) de l'alésage d'accès (4).

8. Arbre de rotor creux selon la revendication 7, **caractérisé en ce que** la pièce tubulaire (6) est ajustée de façon étanche dans les alésages d'accès (4) sous une différence de température entre la pièce tubulaire (6) et les brides frontales (17).

9. Arbre de rotor creux selon une des revendications 7 ou 8, **caractérisé en ce que** les brides frontales (17) sont formées en une seule pièce, en particulier par un procédé de coulée, sur la paroi cylindrique (18).

10. Rotor présentant un arbre de rotor creux selon l'une quelconque des revendications précédentes, garni de paquets de tôles.

11. Machine électrique, en particulier moteur asynchrone ou moteur synchrone à excitation permanente, avec un rotor selon la revendication 10.
